Europäisches Patentamt

(19) European Patent Office

Office européen des brevets

(11) Publication number: **0 313 264 B1**

# EUROPEAN PATENT SPECIFICATION

(12)

(45) Date of publication of patent specification:
27.11.91 Bulletin 91/48

(51) Int. Cl.$^5$: **G01M 3/04**

(21) Application number: **88309543.2**

(22) Date of filing: **12.10.88**

(54) **A liquid leakage sensor.**

(30) Priority: **16.10.87 JP 259756/87**

(43) Date of publication of application:
**26.04.89 Bulletin 89/17**

(45) Publication of the grant of the patent:
**27.11.91 Bulletin 91/48**

(84) Designated Contracting States:
**AT BE CH DE ES FR GB GR IT LI LU NL SE**

(56) References cited:
**DE-A- 3 617 958**
**DE-A- 3 623 872**
**US-A- 4 319 232**
**PATENT ABSTRACTS OF JAPAN, vol. 3, no.**
**153 (E-159), 15th December 1979; & JP-A-54**
**133 196**

(73) Proprietor: **JUNKOSHA CO. LTD.**
**25-25, Miyasaka 2-chome**
**Setagaya-ku Tokyo 156 (JP)**

(72) Inventor: **Akiba, Jyuji**
**1-27-202, 494 Shimo-Kayama**
**Iruma-gun Saitama (JP)**

(74) Representative: **Klunker . Schmitt-Nilson .**
**Hirsch**
**Winzererstrasse 106**
**W-8000 München 40 (DE)**

EP 0 313 264 B1

## Description

The present invention relates to a liquid leakage sensor for the purpose of detecting the leakage of electrically conductive liquids.

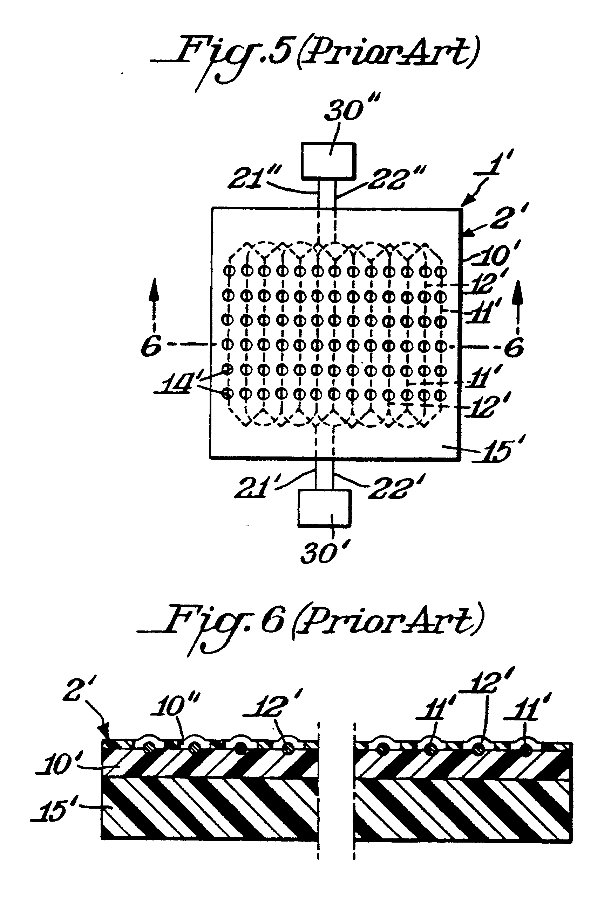

In a conventional water leakage sensor 1', depicted in Figures 5 and 6 of the accompanying drawings, a sensor 2' is installed on a plate-like support 15'. This sensor 2' is constructed having a multiple number of first wire conductors 11' and second conductors 12' aligned parallel to the first conductors in an alternating pattern. The first conductors 11' are connected to each other at both ends, and the second conductors 12' are similarly connected to each other at both ends as shown. The two sets of conductors 11' and 12' are respectively connected to electrical wires 21' and 22' at one end of the sensor base, and the sets of conductors 11' and 12' are respectively connected to other electrical wires 21" and 22" at the other end of the sensor base. The abovementioned conductors 11' and 12' and the ends of the electrical wires 21', 22', 21", 22" are embedded in a rectangular insulating base 10' and covered by insulating cover 10". A connector 30', which leads to a resistance, is connected to the electrical wires 21' and 22' which are led out from one edge of the aforementioned insulating base 10', while a connector 30", which leads to a detection circuit, is connected to the electrical wires 21" and 22" which are led out from the other edge of the insulating base 10'.

In a water leakage sensor 1', constructed as described above, the connections of the conductors 11' and 12' are embedded in the aforementioned insulating base 10'. As a result, the wiring inside the insulating base 10' is extremely complicated and cannot be easily mass-produced. This can result in high manufacturing costs.

According to the present invention there is provided a liquid leakage sensor of claim 1.

Since the connections between conductors and the connections of conductors with the electrical wires are outside the insulating base in the sensor of the present invention, the sensor part is easily manufactured, and costs can be correspondingly reduced. Furthermore, even though the outwardly extending portions at the ends of the conductors and the ends of electrical wires which are connected with these outwardly extending portions are outside the insulating base, these parts are covered by the insulating mould, so that short circuiting in these areas is prevented.

One embodiment of a liquid leakage sensor according to the invention will now be particularly described, by way of example, with reference to the accompanying drawings in which :

Figure 1 is a top plan view of a portion of the liquid leakage sensor ;
Figure 2 is a cross-section of the sensor taken along line 2-2 of Figure 1 ;

Figure 3 is an exploded oblique view of the support and cover which form one insulating mould ;
Figure 4 is a schematic view illustrating the installation of the liquid leakage sensor ;
Figure 5 is a top plan view of a conventional leakage sensor, and
Figure 6 is a cross-section taken along line 6-6 of Figure 5.

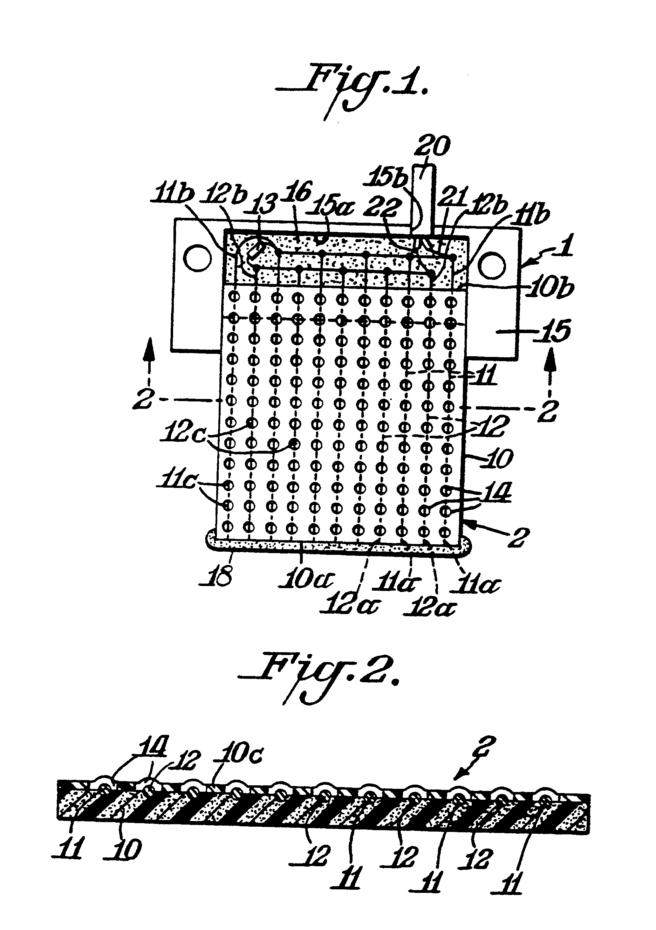

This liquid leakage sensor 1 shown in Figure 1 has a flat sensor part 2. This sensor part 2 is constructed as follows : multiple numbers of respective wireform first and second conductors 11 and 12 are embedded in a flat rectangular insulating base 10 which consists of polytetrafluoroethylene (PTFE). The respective conductors 11 and 12 are installed parallel to each other in an alternating pattern. One end 11a and 12a of each conductor is extended to one edge 10a of the insulating base 10, while the other end of each conductor extends outwardly from the opposite edge 10b of the insulating base 10. These parts extending outwardly from the opposite end are indicated by 11b and 12b in the figures.

The sensor part 2 is formed as follows : a flat cable in which a plurality of elongate conductors are embedded parallel to each other in a belt-form insulating base is cut to an appropriate length. One end of this insulating base is left as it is, while the other end is stripped of insulation so that the conductors are exposed. This sensor part can be mass-produced.

The first conductors 11 are connected to each other in the area of the abovementioned outwardly extending portions 11b, while the second conductors 12 are similarly connected to each other in the area of the outwardly extending portions 12b.

The outwardly extending portions 11b and 12b of the first and second conductors 11 and 12 are connected to each other through a resistance 13. The electrical wires 21 and 22 of a cord 20 are respectively connected to these outwardly extending portions 11b and 12b.

A plurality of cut-outs or openings 14 are formed in one surface, the top surface in Figure 2, of the insulating base 10c. The conductors 11 and 12 are partially exposed by these openings 14. These exposed portions of the conductors 11 and 12 are indicated by 11c and 12c in Figure 1.

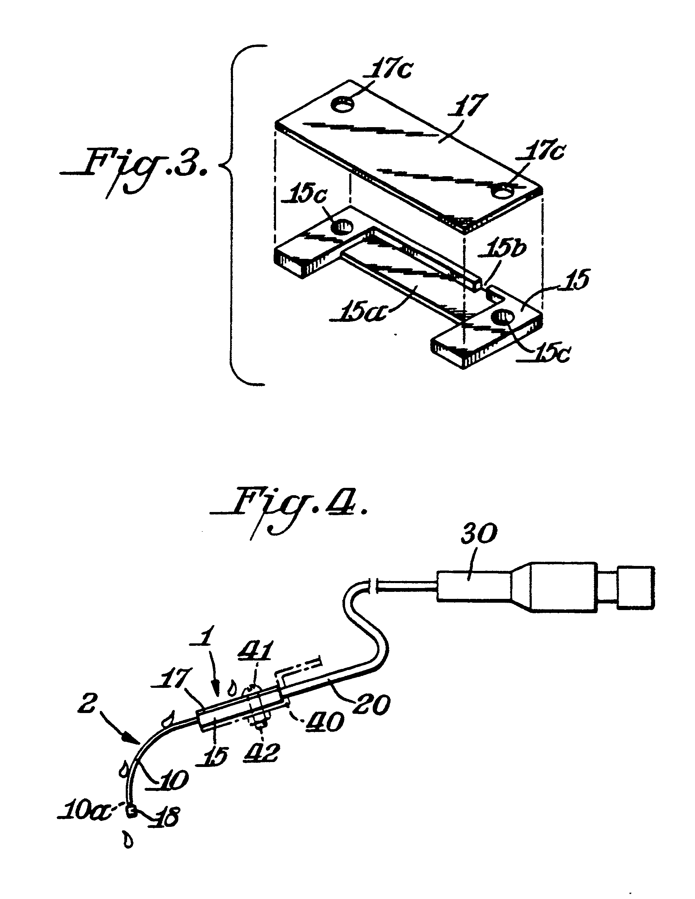

The sensor part 2 is supported by means of a support 15 of a glass-fibre-reinforced epoxy resin in the region near the edge 10b of the insulating base 10. As is shown in detail in Figure 3, the support 15 is a roughly C-shaped flat plate which has a depression 15a formed in the centre. An opening 15b is formed in the rear wall of this depression 15a, and installation holes 15c are formed in both end portions of the support. The edge 10b of the insulating base 10 is inserted part way into the depression 15a of the support 15. The end of the cord 20 is inserted through the aforementioned opening 15b. In this state, the outwardly extending portions 11b and 12b of the respective conductors 11 and 12, the ends of the electrical wires 21 and 22 and the resistance 13 are accommodated inside the depression 15a, and are embedded in an insulating mould or member 16 shown in Figure 1 consisting of an epoxy resin with which the depression 15a is filled. This insulating mould 16 is covered by a cover 17 which has installation holes 17c formed in both ends.

In the example described above, the resistance 13 is connected between the conductors 11 and 12 inside the insulating mould 16. Accordingly, there is no need to lead out electrical wires separately from the electrical wires 21 and 22 for connection with a connector used for resistance connection. Thus, the structure of the sensor of the present invention is simple and inexpensive.

An insulating mould or member 18 is formed on the edge 10a of the insulating base 10. The ends 11a and 12a of the respective conductors 11 and 12 are covered by this insulating mould 18.

As shown in Figure 4, the liquid leakage sensor 1 is connected to a connector 30 through the aforementioned cord 20. During use, this connector 30 is connected to the connector of a detection device which has an alarm function.

As shown in Figure 4, the support 15 and cover 17 of the liquid leakage sensor 1 may be attached to an bracket 40 by means of bolts 41, which pass through the installation holes 15c and 17c of the support and cover, and nuts 42. Since the cord 20 extends from only one end of the liquid leakage sensor 1, there are few restrictions on the conditions of installation. Accordingly, the sensor can be installed as described above so that the sensor part 2 hangs down from the bracket 40 as shown.

In the installed state described above, the insulating base 10 is bent at a fixed rate of curvature. This bent state is maintained by the shape-maintaining function of the respective conductors 11 and 12.

In the above construction, conductors 11 and 12 are conductively connected through the aforementioned resistance 13 when no conductive liquid is present on the upper surface of the insulating base 10 of the sensor part 2. When a conductive liquid such as water, indicated by the droplets shown in Figure 4, reaches the insulating base 10 over the cover 17 from the top surface of the bracket 40, some of the exposed portions 11c and 12c of the first conductors 11 and second conductors 12 are conductively connected with each other through this liquid. The resulting change in the resistance between the conductors 11 and 12 is detected by the aforementioned detection device. As a result, the leakage of liquid is detected, and an alarm can be sounded.

If the conductive liquid were to remain indefinitely on the surface of the insulating base 10, it would not be possible to ascertain with accuracy exactly when the liquid leakage occurred, and when the leaking condition was remedied. Accordingly, the water-shedding porperties of the insulating base 10 must be good. In the example of application described here, the material of the insulating base 10 consists of PTFE, which is water-repellent. Furthermore, the insulating base 10 is inclined from the region of the support 15, and this inclination becomes steeper toward the aforementioned edge 10a so that the edge 10a is more or less vertically oriented. Accordingly, the sensor has sufficient water-shedding properties. In the sensor part 2, one end 11a and 12a of each of the conductors 11 and 12 is extended to the edge 10a of the insulating base 10. However, these ends 11a and 12a are covered by the insulating mould 18, so that conductive connection of the ends by any conductive liquid remaining in the region of the edge 10a is prevented.

In the present invention, as was described, the time of liquid leakage can be accurately detected. When the leaking state is eliminated, the sensor returns to a non-detection state without human intervention. Accordingly, the sensor of the present invention is suitable for the detection of liquid leakage in places subject to high levels of radiation in nuclear reactor facilities and uranium concentration facilities, for example.

## Claims

1. A liquid leakage sensor (1) comprising an electrically insulating sensor base (10, 10c) and first and second elongate electrical conductors (11, 12) embedded in said insulating base (10, 10c), portions of said conductors (11, 12) being exposed to the environment through a plurality of openings (14) in said insulating base (10, 10c), the sensor being capable of detecting a conductive connection between exposed portions of said first and second conductors (11, 12) when an electrically conductive liquid penetrates some of said openings (14), wherein one end (11a, 12a) of each of said first and second conductors (11, 12) extends to one edge (10a) of said insulating base (10, 10c) and is covered by electrical insulation (18) and the other end (11b, 12b) of each of said first and second conductors (11, 12) extends outwardly from the opposite edge of said insulating base (10, 10c), the outward extension of these first and second conductors (11, 12) being connected to alarm means via electrical wires (21, 22) both the outward extensions and the electrical wires (21, 22) being covered by electrical insulation (16).

2. A sensor according to claim 1, wherein said one end (11a, 12a) of each of said first and second conductors (11, 12) is affixed at the one edge of the insulating base (10) by an insulating mould (18), and both the outward extensions and electrical wires (21, 22) being encased within an electrical insulating mould (16).

3. A sensor (1) according to claim 1 or claim 2 wherein said sensor base (10, 10c) is polytetrafluoroethylene.

## Patentansprüche

1. Flüssigkeitsleck-Sensor (1), umfassend eine elektrisch isolierende Sensor-Unterlage (10, 10c) und erste und zweite langgestreckte elektrische Leiter (11, 12), die in die isolierende Unterlage (10, 10c) eingebettet sind, wobei Abschnitte der Leiter (11, 12) gegenüber der Umgebung durch mehrere Öffnungen (14) in der isolierenden Unterlage (10, 10c) hindurch freiliegen, der Sensor in der Lage ist, eine leitende Verbindung zwischen freiliegenden Abschnitten der ersten und der zweiten Leiter (11, 12) festzustellen, wenn eine elektrisch leitende Flüssigkeit einige der Öffnungen (14) durchdringt, wobei ein Ende (11a, 12a) jedes der ersten und der zweiten Leiter (11, 12) sich zu einer Kante (10a) der isolierenden Unterlage (10, 10c) erstreckt und von einer elektrischen Isolierung (18) abgedeckt ist, während das andere Ende (11b, 12b) jedes der ersten und der zweiten Leiter (11, 12) sich von der gegenüberliegenden Kante der isolierenden Unterlage (10, 10c) nach außen erstreckt, wobei die äußeren Verlängerungen dieser ersten und zweiten Leiter (11, 12) über elektrische Drähte (21, 22) mit einer Alarmeinrichtung verbunden sind und sowohl die äußeren Verlängerungen als auch die elektrischen Drähte (21, 22) von einer elektrischen Isolierung (16) abgedeckt sind.

2. Sensor nach Anspruch 1, bei dem das eine Ende (11a, 12a) jedes der ersten und der zweiten Leiter (11, 12) an der einen Kante der isolierenden Unterlage (10) durch ein Isolierformteil (18) befestigt ist und sowohl die äußeren Verlängerungen als auch die elektrischen Drähte (21, 22) in einem elektrisch isolierenden Formteil (16) eingefaßt sind.

3. Sensor (1) nach Anspruch 1 oder Anspruch 2, bei dem die Sensor-Unterlage (10, 10c) Polytetrafluoräthylen ist.

## Revendications

1. Détecteur de fuite de liquide (1) comprenant une base de détecteur électriquement isolante (10, 10c) et des premiers et seconds conducteurs électriques allongés (11, 12) noyés dans ladite base isolante (10, 10c), des parties desdits conducteurs (11, 12) étant exposées à l'environnement au travers d'une pluralité d'ouvertures (14) ménagées dans ladite base isolante (10, 10c), le détecteur permettant de détecter une connexion conductrice entre des parties exposées desdits premiers et seconds conducteurs (11, 12) lorsqu'un liquide électriquement conducteur pénètre à l'intérieur de certaines desdites ouvertures (14), dans lequel une seule extrémité (11a, 12a) de chacun desdits premiers et seconds conducteurs (11, 12) s'étend jusqu'à un bord (10a) de ladite base isolante (10, 10c) et est recouverte par un moyen d'isolation électrique (18) et l'autre extrémité (11b, 12b) de chacun desdits premiers et seconds conducteurs (11, 12) s'étend vers l'extérieur depuis le bord opposé de ladite base isolante (10, 10c), l'extension vers l'extérieur de ces premiers et seconds conducteurs (11, 12) étant connectée à un moyen d'alarme via des fils électriques (21, 22), les extensions vers l'extérieur et les fils électriques (21, 22) étant tous deux recouverts par un moyen d'isolation électrique (16).

2. Détecteur selon la revendication 1, dans lequel ladite extrémité (11a, 12a) de chacun desdits premiers et seconds conducteurs (11, 12) est fixée au niveau d'un bord de la base isolante (10) au moyen d'un moulage isolant (18), et les extensions vers l'extérieur ainsi que les fils conducteurs (21, 22) sont tous deux noyés à l'intérieur d'un moulage isolant électrique (16).

3. Détecteur (1) selon la revendication 1 ou 2, dans lequel ladite base de détecteur (10, 10c) est en polytétrafluoréthylène.

# _Fig.1._

# _Fig.2._

*Fig.3.*

*Fig.4.*

# *Fig.5 (Prior Art)*

# *Fig. 6 (Prior Art)*